# EUROPÄISCHE PATENTSCHRIFT

(11) **EP 2 531 068 B1**
(45) Veröffentlichungstag und Bekanntmachung des Hinweises auf die Patenterteilung: **30.03.2016**
(21) Anmeldenummer: 11703813.3
(22) Anmeldetag: 26.01.2011
(51) Int. Cl.: A47B 88/04

(54) **KUPPLUNGSVORRICHTUNG MIT SEITENVERSTELLUNG FÜR EINE SCHUBLADE**
COUPLING DEVICE HAVING SIDE ADJUSTMENT FOR A DRAWER
DISPOSITIF D'ACCOUPLEMENT À RÉGLAGE LATÉRAL POUR TIROIR

(30) Priorität: 03.02.2010 AT 1442010
(43) Veröffentlichungstag der Anmeldung: 12.12.2012
(73) Patentinhaber: Julius Blum GmbH, 6973 Höchst (AT)
(72) Erfinder: HOLZER, Andreas, A-6850 Dornbirn (AT); HÄMMERLE, Kurt, A-6890 Lustenau (AT)
(74) Vertreter: Torggler, Paul Norbert
(86) Internationale Anmeldenummer: PCT/AT2011/000041
(87) Internationale Veröffentlichungsnummer: WO 2011/094776

(56) Entgegenhaltungen:
- EP-A1- 0 701 787
- DE-U1- 29 600 180
- DE-U1-202007 014 954
- DE-U1-202007 017 999
- DE-U1-202009 003 886
- US-A1- 2004 239 219

## Beschreibung

Die Erfindung betrifft eine Vorrichtung zum lösbaren Kuppeln einer Schublade mit einer ausziehbaren Schiene einer Ausziehführung, mit einer Verstelleinrichtung durch die eine Position einer mit der Schiene verbundenen Schublade relativ zur Schiene in seitlicher Richtung einstellbar ist, wobei die Vorrichtung einen an der Schublade befestigbaren Befestigungsteil und einen mit der Schiene kuppelbaren Kupplungsteil aufweist, wobei der Kupplungsteil lösbar mit der Schiene kuppelbar ist.

Kupplungsvorrichtungen, mit denen eine Schublade an einer Schiene einer Ausziehführung in einfacher Weise montierbar bzw. demontierbar ist, sind im Stand der Technik bekannt. Zumeist wird die Kupplungsvorrichtung an der Schublade befestigt, während die Ausziehführung am Möbel montiert ist. Mittels der Kupplungsvorrichtung kann die Schublade, die auf die Ausziehführung aufgeschoben wird, mit einer Schiene der Ausziehführung verbunden werden, wobei zu dieser Verbindung im Verbindungsbereich Anschlagflächen angeordnet sind, mittels denen eine selbsttätige Verrastung der Schublade mit der Schiene der Ausziehführung erfolgen kann. Beispiele derartiger Befestigungsmöglichkeiten sind in der EP 0 421 458 B1, in der DE 20 2007 006 549 U1 und der WO 2009/149479 der Anmelderin gezeigt.

Durch geringfügige Ungenauigkeiten in der Herstellung der Ausziehführung bzw. der Vorrichtung zum lösbaren Kuppeln der Schublade mit der Ausziehführung oder durch Ungenauigkeiten bei deren Montage in bzw. an einem Möbelkorpus oder der Schublade kann es vorkommen, dass sich eine mittels einer derartigen Ausziehführung aus einem Möbelkorpus ausziehbaren Schublade nicht wie gewünscht in Längsrichtung sondern leicht schräg dazu ausziehen lässt. Die Schublade ist also leicht schräg gestellt. Insbesondere, wenn mehrere Schubladen in einem Möbelkorpus angeordnet sind, bedeutet dies, dass die Frontblenden der Schubladen nicht homogen angeordnet sind. Ein derartiges unsauberes Frontbild eines Möbelkorpus ist unerwünscht. Zur Verstellung der eingebauten Schubladen in vertikaler Richtung ist im Stand der Technik eine Kupplungsvorrichtung für eine Schublade bekannt, die mit einem an der Schublade montierten, eine Riffelung aufweisenden Halteelement in Eingriff ist, wobei durch eine Verrastung an den Riffelungen eine Höhenverstellung, d.h. eine Verstellung in vertikaler Richtung möglich ist. Des Weiteren zeigt die EP 1 147 725 B1 eine Möglichkeit, mit der die Neigung der Frontblende einer bereits montierten Schublade ohne wesentliche Veränderung der Höhenlage relativ zum Korpus einstellen kann. Eine Möglichkeit zur Höhenverstellung durch einen Keil, der zwischen Schiene und Schublade bzw. Vorrichtung zum lösbaren Kuppeln eingeschoben ist, zeigt die EP 1 457 137.

Die DE 296 00 180 U1 zeigt eine derartige Vorrichtung zum lösbaren Kuppeln mit einer Seiten- und einer Höheverstellvorrichtung. Ein federbeaufschlagter Riegel greift in eine Ausnehmung einer Adapterschiene ein, die fest mit der Ausziehschiene verbunden ist, wobei der Riegel durch einen Betätigungsknopf entgegen der Federkraft zum Lösen der Kupplung bewegbar ist. Zur Seitenverstellung ist eine Stellspindel vorgesehen, die über ein Anschlagelement in die Adapterschiene eingreift und dadurch die Vorrichtung relativ zur Adapterschiene verschieben kann. Dabei besteht die Gefahr eines versehentlichen Lösens des gekuppelten Zustandes der Vorrichtung mit der Ausziehschiene. Zudem ist mit der Adapterschiene ein zusätzliches Bauteil nötig, was zu weiteren Nachteilen hinsichtlich des Herstellungsaufwands und auch des Platzbedarfes der Vorrichtung führt.

Neben diesen Verstellmöglichkeiten in vertikaler Richtung ist im Stand der Technik bekannt, eine Kupplungsvorrichtung der eingangs erwähnten Art mit einer Seitenverstellung zu versehen. Zu diesem Zweck ist ein Schieber mit einer Anschlagfläche vorgesehen, der in der Kupplungsvorrichtung verstellbar beweglich gelagert ist. Die Anschlagfläche des Schiebers liegt an einer korrespondierenden Anschlagfläche der Ausziehführung an, sodass durch eine Verstellung der Position des Schiebers in seitlicher Richtung die Schublade relativ zur Ausziehführung ebenfalls in seitlicher Richtung mitbewegt wird. Dabei besteht die Gefahr, dass sich die Kupplungsvorrichtung aus der Eingriffstellung mit der Ausziehführung löst, zumal die Kupplungsvorrichtung durch den in der Vorrichtung beweglich gelagerten Schieber eine Hebelwirkung erzeugt.

Die DE 296 00 180 U1 zeigt eine Vorrichtung zum lösbaren Kuppeln mit einer Seiten- und einer Höhenverstellvorrichtung für die Ausrichtung einer Schublade bzgl. eines Möbelkorpus. Ein federbeaufschlagter Riegel greift in eine Ausnehmung einer Adapterschiene ein, die fest mit der Ausziehschiene verbunden ist, wobei der Riegel durch einen Betätigungsknopf entgegen der Federkraft zum Lösen der Kupplung bewegbar ist. Zur Seitenverstellung ist eine Stellspindel vorgesehen, die über ein Anschlagelement in die Adapterschiene eingreift und dadurch die Vorrichtung relativ zur Adapterschiene in seitlicher Richtung verschieben kann. Dabei besteht die Gefahr eines versehentlichen Lösens des gekuppelten Zustandes der Vorrichtung mit der Ausziehschiene. Zudem ist mit der Adapterschiene ein zusätzliches Bauteil nötig, was zu weiteren Nachteilen hinsichtlich des Herstellungsaufwandes und auch des Platzbedarfes der Vorrichtung führt.

In der US 2004/0239219 A1 ist eine gattungsgemäße Kupplungsvorrichtung beschrieben.

Die Aufgabe der Erfindung ist es, eine Vorrichtung zur Verfügung zu stellen, mit der eine in einem Möbelkorpus eingebaute Schublade, die mit einer Ausziehführung verbunden ist, in seitlicher Richtung verstellt werden kann und dabei die Nachteile des Standes der Technik vermeidet, wobei ein versehentliches Lösen der Vorrichtung von der Schiene vermieden werden soll.

Dies wird durch eine Vorrichtung mit den Merkmalen des Anspruchs 1 ermöglicht.

Die erfindungsgemäße Vorrichtung zum lösbaren Kuppeln einer Schublade mit einer ausziehbaren Schiene einer Ausziehführung ermöglicht in der eingangs erwähnten einfachen Art die Montage bzw. Demontage der Schublade in ihrer Gesamtheit an bzw. von der Ausziehführung.

Um die Position einer mit der Schiene verbundenen Schublade relativ zur Schiene in seitlicher Richtung zu verändern, beispielsweise zur Korrektur des Fugenbilds einer in einem Möbelkorpus eingebauten Schublade, ist nun erfindungsgemäß vorgesehen, dass die Vorrichtung zum lösbaren Kuppeln einen an der Schublade befestigbaren Befestigungsteil und einen mit der Schiene kuppelbaren Kupplungsteil aufweist, wobei der Kupplungsteil und der Befestigungsteil relativ zueinander bewegbar sind und dabei die relative Position des Befestigungsteils und des Kupplungsteils über eine in der Vorrichtung zum lösbaren Kuppeln vorgesehene Verstelleinrichtung relativ zueinander einstellbar ist.

Im Montagezustand, in dem die Schublade mit der Schiene einer Ausziehführung verbunden ist, sorgt der Kupplungsteil der Vorrichtung für die Verbindung der Schublade mit der Schiene, indem der Befestigungsteil der Vorrichtung an der Schublade befestigt ist und der Kupplungsteil lösbar mit der Schiene verbunden ist.

Durch die erfindungsgemäße Einstellbarkeit der relativen Positionen des Befestigungsteils und des Kupplungsteils zueinander ist die Position der mit der Schiene verbundenen Schublade relativ zur Schiene in seitlicher Richtung einstellbar, wobei sich die seitliche Richtung in Montagezustand auf eine horizontale Richtung quer zur Längsrichtung, in die die Schublade ausziehbar ist, bezieht.

Dabei kann vorgesehen sein, dass der Befestigungsteil und der Kupplungsteil verschiebbar aneinander geführt sind, beispielsweise durch entsprechend ausgebildete Anschlagflächen, damit gewährt wird, dass die Positionsverschiebung tatsächlich in seitlicher Richtung erfolgt.

Weiters kann vorgesehen sein, dass der Befestigungsteil und der Kupplungsteil jeweils eine Montageplatte umfassen, wobei die Montageplatte des Befestigungsteils Befestigungseinrichtungen, z.B. Bohrlöcher für Schrauben, aufweist, mittels denen der Befestigungsteil an der Schublade befestigbar ist. An der Montageplatte des Kupplungsteils ist das Kupplungselement selbst, welches im montierten Zustand mit der Schiene der Ausziehführung in Eingriff ist, gelagert. Zur relativen Positionsverstellung des Befestigungsteils und des Kupplungsteils zueinander kann dabei vorgesehen sein, dass die Verstelleinrichtung die Positionen der Montageplatten des Befestigungsteils und der Montageplatte des Kupplungsteils gegeneinander in seitlicher Richtung verschiebt.

Die Verstelleinrichtung kann dabei selbsthemmend ausgebildet sein, sodass nach einer aktiven Verstellung der Schublade relativ zur Ausziehschiene in seitlicher Richtung eine selbsttätige weitere Verschiebung verhindert wird. Diese Selbsthemmung kann beispielsweise auf einem Reibschluss der Bauteile der Verstelleinrichtung basieren.

Die Ausziehführung kann eine Korpusschiene und eine Ladenschiene aufweisen, wobei die Korpusschiene an einem Möbelkorpus montiert wird und die Ladenschiene entlang der Korpusschiene ausziehbar ist. Zur Montage der Schublade im Möbelkorpus wird die Schublade mit der Ladenschiene über die erfindungsgemäße Vorrichtung lösbar gekuppelt.

Des Weiteren kann es vorgesehen sein, dass zwischen der Korpusschiene und der Ladenschiene eine Mittelschiene angeordnet ist, durch die ein Vollauszug der Schublade ermöglicht wird.

Weitere Vorteile der vorliegenden Erfindung werden in den abhängigen Ansprüchen definiert.

In einer vorteilhaften Ausführungsform der Erfindung ist an der Vorrichtung eine Führungseinrichtung angeordnet, von der der Befestigungsteil und der Kupplungsteil relativ zueinander verschiebbar geführt sind, um die gewünschte Einstellbarkeit in seitlicher Richtung zu gewährleisten. Die Führungseinrichtung ist dabei zumindest zweiteilig ausgebildet, wobei ein am Befestigungsteil angeordneter Teil der Führungseinrichtung mit einem zugehörigen am Kupplungsteil angeordneten Teil der Führungseinrichtung in Wirkverbindung steht. Weist der Befestigungsteil und der Kupplungsteil jeweils eine Montageplatte auf, kann die Führungseinrichtung Teil der zwei Montageplatten sein.

Besonders bevorzugt ist dabei vorgesehen, dass die Führungseinrichtung mindestens ein im Befestigungsteil oder im Kupplungsteil angeordnetes Langloch aufweist, in welches ein am anderen dieser beiden Teile angebrachter Führungszapfen oder Führungsstift eingreift. Der Führungsstift oder Führungszapfen ist dabei im Langloch verschiebbar. Sind mehrere derartige Langlöcher mit zugehörigen Führungszapfen oder Führungsstiften vorgesehen, kann eine wechselweise Anordnung gewünscht sein, wobei ein Langloch am Befestigungsteil und ein weiteres Langloch im Kupplungsteil angeordnet ist, in die jeweils an unterschiedlichen Teilen angebrachte Führungszapfen oder Führungsstifte eingreifen. Dadurch ist eine besonders stabile Bewegungsführung ermöglicht. Weisen der Befestigungsteil und der Kupplungsteil Montageplatten auf, kann es wiederum vorgesehen sein, auf diesen das Langloch und den Führungszapfen oder Führungsstift anzuordnen. Statt eines Langloches ist auch eine Kulissenführung denkbar.

In einer bevorzugten Ausführungsform ist die Verstelleinrichtung, mit der die Positionen des Befestigungsteils und des Kupplungsteils relativ zueinander einstellbar sind, zumindest zweiteilig ausgebildet, wobei ein erster Teil am Befestigungsteil angeordnet ist, der mit einem am Kupplungsteil angeordneten zweiten Teil in Wirkverbindung tritt.

Die Verstelleinrichtung kann dabei derart ausgebildet sein, dass eine stufenlose Einstellung der relativen Positionen zueinander oder eine diskrete Positionsverschiebung ermöglicht wird.

Mit einer Arretiereinrichtung, die ebenfalls vorgesehen sein kann, kann die relative Position des Befestigungsteils und des Kupplungsteils zueinander arretiert werden. Diese Arretierung kann gelöst werden. Durch eine derartige Arretiereinrichtung ist ein versehentliches Verstellen der eingestellten Positionen des Befestigungsteils und des Kupplungsteils zueinander nicht mehr möglich, wodurch ein weiteres seitliches Verschieben der Schublade relativ zur Ausziehführung verhindert wird. Vorzugsweise umfasst dabei die Arretiereinrichtung eine eine Klemmwirkung erzeugende Exzenterschraube. Zur Arretierung des Befestigungsteils mit dem Kupplungsteil sind natürlich auch andere Mittel, wie beispielsweise eine Schraube oder Ähnliches verwendbar.

In einer Ausführungsform der Erfindung weist die Verstelleinrichtung ein Stellrad mit einer Spiralscheibe auf, das am Befestigungsteil oder am Kupplungsteil drehbar gelagert ist. Die Spiralscheibe umfasst spiralförmig ausgebildete Anschlagflächen, die mit in diskreten Abständen angebrachten Halteelementen in Eingriff sind. Ist das Stellrad am Befestigungsteil angeordnet, so sind die Halteelemente am Kupplungsteil angeordnet und umgekehrt. Die Halteelemente können beispielsweise in Form einer Verzahnung ähnlich einer Zahnstange ausgebildet sein. Durch eine Drehung des Stellrads wird die Spiralscheibe zur Positionsverschiebung des Befestigungsteils und des Kupplungsteils an den Halteelementen entlang geführt. Das Stellrad kann dabei werkzeuglos betätigbar sein und erlaubt eine Verstellung in beide Richtungen. Zusätzlich oder alternativ kann eine Schraube vorhanden sein, mit der das Stellrad mittels eines Schraubendrehers betätigbar ist.

In einer weiteren Ausführungsform umfasst die Verstelleinrichtung ein im Befestigungsteil oder im Kupplungsteil angeordnetes Zahnrad, das mit einer am anderen dieser beiden Teile angeordneten Verzahnung in Eingriff ist. Ist also das Zahnrad am Befestigungsteil angeordnet, ist die Verzahnung, mit der das Zahnrad in Eingriff ist am Kupplungsteil angeordnet und umgekehrt. Die Verzahnung ist dabei im Montagezustand in seitlicher Richtung angeordnet, sodass eine Drehung des Zahnrades eine seitliche Bewegung erzeugen kann.

Die Verstelleinrichtung kann auch einen Exzenter umfassen, der ebenfalls durch eine Drehung die Positionsverschiebung des Befestigungsteils und des Kupplungsteils erzeugt. Natürlich sind weitere Verstelleinrichtungen, beispielsweise mit einem Hebel oder einem Stößel im Sinne der Erfindung verwendbar.

Die Erfindung betrifft weiters ein Vorrichtungsset zum lösbaren Kuppeln einer Schublade mit zwei ausziehbaren, an gegenüberliegenden Seiten eines Möbelkorpus angeordneten Schienen jeweils einer Ausziehführung. Das Vorrichtungsset umfasst dabei eine erste Vorrichtung zum lösbaren Kuppeln der Schublade mit der ersten Schiene, wobei die erste Vorrichtung wie oben ausgeführt ausgebildet ist. Eine zweite Vorrichtung zum lösbaren Kuppeln der Schublade mit der zweiten Schiene dient dazu, die Schublade auf ihren beiden Seiten mit den entsprechenden ausziehbaren Schienen einer Ausziehführung zu koppeln. Die auf beiden Seiten der Schublade anzuordnenden Ausziehführungen können dabei je eine Korpus- und eine Ladenschiene umfassen. Zwischen der Korpus- und der Ladenschiene kann eine Mittelschiene angeordnet sein. Die zwei Vorrichtungen sind entsprechend auf beiden Seiten der Schublade montiert, wobei bevorzugt vorgesehen ist, die Vorrichtungen im vorderen Bereich, also im Bereich der Frontblende anzuordnen.

Erfindungsgemäß ist nun vorgesehen, dass nur die erste Vorrichtung eine Verstelleinrichtung zur relativen Positionsverschiebung des Befestigungsteils und des Kupplungsteils aufweist. Damit die Schublade trotzdem relativ zur Schiene in seitlicher Richtung verschiebbar ist, ist die zweite Vorrichtung zum lösbaren Kuppeln in entsprechender Weise ebenfalls teilweise beweglich ausgebildet. Die zweite erfindungsgemäße Vorrichtung weist einen an der Schublade befestigbaren zweiten Befestigungsteil und einen mit der Schiene kuppelbaren zweiten Kupplungsteil auf, wobei der zweite Befestigungsteil und der zweite Kupplungsteil zur Anpassung an die relative Positionsverschiebung des Befestigungsteils und des Kupplungsteils der ersten Vorrichtung relativ zueinander beweglich gelagert sind.

Der zweite Kupplungsteil und der zweite Befestigungsteil sind relativ zueinander schwimmend gelagert. Wird mittels der Verstelleinrichtung die relative Position des Befestigungsteils und des Kupplungsteils der ersten Vorrichtung eingestellt, führt dies zu einer Mitbewegung des zweiten Befestigungsteils oder des zweiten Kupplungsteils, sodass auch deren relative Position verschoben wird.

Die zweite Vorrichtung kann dabei bis auf die im Gegensatz zur ersten Vorrichtung nicht vorhandene Verstelleinrichtung im Wesentlichen wie die erste Vorrichtung aufgebaut sein.

Bevorzugt ist vorgesehen, dass an der zweiten Vorrichtung eine zweite Führungseinrichtung angeordnet ist, von welcher der zweite Befestigungsteil und der zweite Kupplungsteil relativ zueinander verschiebbar geführt sind. Dabei kann die zweite Führungseinrichtung mindestens ein im zweiten Befestigungsteil oder im zweiten Kupplungsteil angeordnetes Langloch aufweisen, in welches ein am anderen dieser beiden Teile angebrachter Führungszapfen oder Führungsstift in ähnlicher Weise wie die oben beschriebene Führungseinrichtung eingreift und dort bewegbar gelagert ist.

In einer bevorzugten Ausführungsform ist vorgesehen, dass die zweite Vorrichtung eine Arretiereinrichtung aufweist, durch die der zweite Befestigungsteil und der zweite Kupplungsteils lösbar arretierbar sind, sodass eine weitere relative Bewegung dieser Teile verhindert wird. Ist vorgesehen, dass nur an der zweiten Vorrichtung nur eine derartige Arretiereinrichtung angeordnet ist, ist eine seitliche Positionsverschiebung der Schublade relativ zu den Schienen nur dann möglich, wenn die Arretiereinrichtung an der zweiten Vorrichtung gelöst wird und anschließend die Verstelleinrichtung an der ersten Vorrichtung betätigt wird. Somit wird ein versehentliches Verstellen unmöglich. Indem die zweite Vorrichtung arretiert ist, können sich der Befestigungsteil und der Kupplungsteil der ersten Vorrichtung relativ zueinander nicht bewegen.

Die Erfindung betrifft weiters eine Schublade mit wenigstens einer Ausziehführung und einer an der Schublade befestigten wie oben beschriebenen Vorrichtung oder einem an der Schublade befestigten wie oben beschrienen Vorrichtungsset.

Die Erfindung betrifft weiters ein Möbel mit wenigstens einer derartigen Schublade.

Weitere Einzelheiten und Vorteile der vorliegenden Erfindung werden anhand der nachfolgenden Figurenbeschreibung erläutert. Dabei zeigen:
- Fig. 1: eine teilweise aufgebrochene perspektivische Ansicht eines erfindungsgemäßen Möbels,
- Fig. 2a - 2c: eine Ansicht von unten auf eine mit Ausziehführungen mittels eines erfindungsgemäßen Vorrichtungssets gekoppelten Schublade sowie zwei zugehörige Deteilansichten,
- Fig. 3a - 3c: eine Ansicht von unten einer mit zwei Ausziehführungen mittels eines erfindungsgemäßen Vorrichtungssets gekoppelten Schublade in teilweise ausgezogenem Zustand,
- Fig. 4: eine perspektivische Ansicht einer erfindungsgemäßen Vorrichtung,
- Fig. 5: eine Explosionsdarstellung einer erfindungsgemäßen Vorrichtung,
- Fig. 6a - 6c: eine perspektivische Ansicht des Kupplungsteiles mit einem am Befestigungsteil drehbar gelagerten Stellrad, eine Detailansicht der Verstelleinrichtung sowie eine Schnittdarstellung entlang der in Fig. 6b mit T-T bezeichneten Schnittgeraden,
- Fig. 7a und 7b: eine Draufsicht sowie eine Ansicht von unten einer erfindungsgemäßen Vorrichtung,
- Fig. 8: eine perspektivische Ansicht der erfindungsgemäßen zweiten Vorrichtung,
- Fig. 9: eine perspektivische Ansicht der erfindungsgemäßen zweiten Vorrichtung mit einer Explosionsdarstellung der Arretiereinrichtung,
- Fig. 10: eine perspektivische Ansicht der zweiten Vorrichtung mit Arretiereinrichtung in Offenstellung,
- Fig. 11a und: 11b eine Draufsicht auf eine zweite Vorrichtung mit Arretiereinrichtung in Offenstellung und eine Schnittdarstellung entlang der in Fig. 11a mit J-J bezeichneten Schnittgeraden,
- Fig. 12: eine perspektivische Ansicht einer zweiten Ausführungsform einer erfindungsgemäßen Vorrichtung,
- Fig. 13: eine perspektivische Ansicht der Vorrichtung der Fig. 12 mit einer teilweisen Explosionsdarstellung und
- Fig. 14a - 14c: eine Draufsicht auf die Vorrichtung der Fig. 12 in verschiedenen Einstellungspositionen.

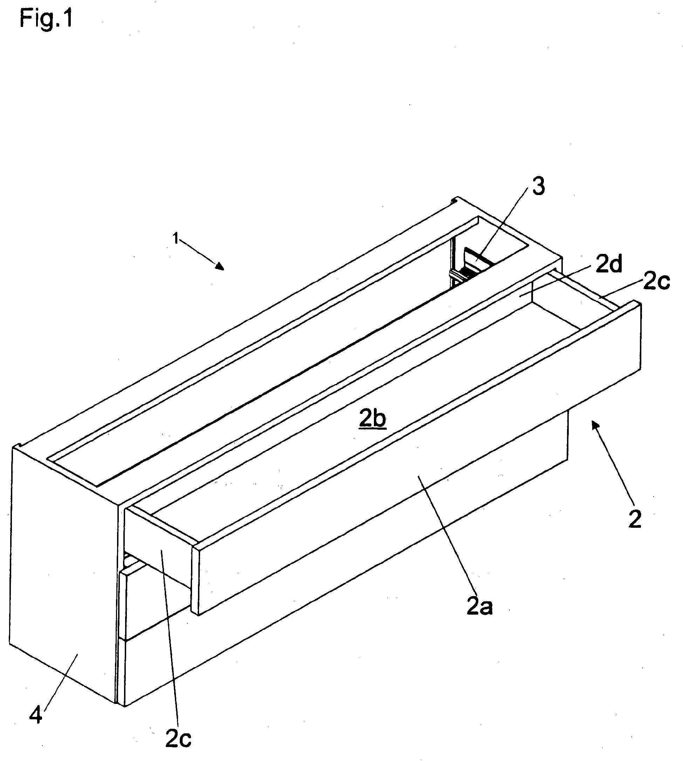

Die teilweise aufgebrochene perspektivische Ansicht der Fig. 1 zeigt ein Möbel 1 mit mehreren in einem Möbelkorpus 4 angeordneten, ausziehbaren Schubladen 2, die über jeweils zwei, an gegenüberliegenden Seiten des Möbelkorpus 4 angeordneten Ausziehführungen 3 im Möbelkorpus 4 montiert sind. Die Ausziehführungen 3 sind auf gegenüberliegenden Seitenwänden 2c der Schublade 2 angeordnet. Die Schublade 2 weist an ihrer Vorderseite eine Frontblende 2a und an ihrer Rückseite eine Schubladenrückwand 2d auf. Dazwischen ist der Schubladenboden 2b angeordnet.

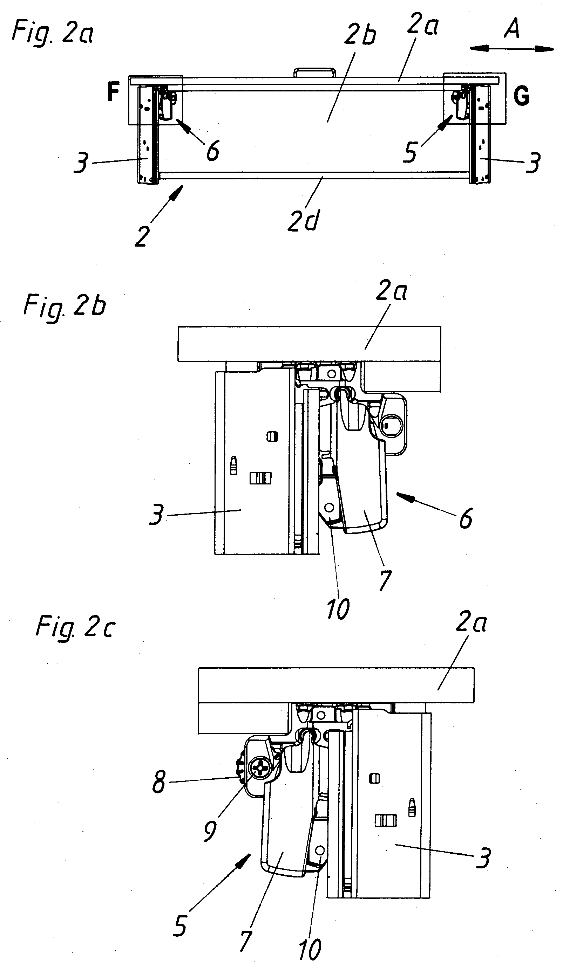

Fig. 2a zeigt eine Schublade 2, die an den gegenüberliegenden Seitenwänden 2c mit je einer Ausziehführung 3 gekoppelt ist. Die Ausziehführungen 3 umfassen dabei eine Korpusschiene 3c, die am Möbelkorpus 4 befestigt ist. Aus Gründen der Übersichtlichkeit ist der Möbelkorpus 4 in dieser Figur nicht dargestellt. Die Schublade 2 ist dabei mit einem erfindungsgemäßen Vorrichtungsset an die zwei an gegenüberliegenden Seiten des Möbelkorpus 4 befestigten Ausziehführungen 3 gekoppelt. Am vorderen im Bereich der Frontblende 2a liegenden Ende des Schubladenbodens 2d sind zwei Vorrichtungen 5, 6 zum lösbaren Kuppeln an die Schienen 3a einer Ausziehführung 3 angeordnet. Eine erste Vorrichtung 5 weist dabei eine Verstelleinrichtung auf, die über ein Stellrad 8 eine seitliche Verschiebung in Richtung des Doppelpfeils A der Schublade 2 relativ zur Ausziehführung 3 ermöglicht. Auf der gegenüberliegenden Seite ist eine zweite Vorrichtung 6 angeordnet, die über keine Verstelleinrichtung verfügt. Die zweite Vorrichtung 6 ist aber derart ausgebildet, dass sie die seitlichen Positionsverschiebungen der Schublade 2 ermöglicht.

In Fig. 2b ist eine Detailansicht des mit F markierten Ausschnitts der Fig. 2a zu sehen. Die zweite Vorrichtung 6 dient ebenso wie die erste Vorrichtung 5 zum lösbaren Kuppeln der Schublade 2 an eine Ausziehführung 3. Ein federnder oder federbeaufschlagbarer Rastteil 10 ist im Zuge des Montageprozesses selbsttätig mit einer Schiene 3a einer Ausziehführung 3 verrastbar. Zum Lösen der Arretierung ist ein Löseteil 7 in Form eines händisch zu bedienenden Schwenkhebels vorgesehen, sodass die Kupplung zwischen der zweiten Vorrichtung 6 und der Schiene 3a der Ausziehführung 3 lösbar ist.

Fig. 2c zeigt in einer Detailansicht den mit G markierten Ausschnitt der Fig. 2a. Zum lösbaren Kuppeln der Schublade 2 mit der Schiene 3a einer Ausziehführung 3 ist hier eine erfindungsgemäße erste Vorrichtung 5 vorgesehen, die über ein gleich ausgebildetes Rastteil 10 zur Verrastung und ein gleich ausgebildetes Löseteil 7 zum Lösen der Kupplung wie die zweite Vorrichtung 6 verfügt. Im Gegensatz zur zweiten Vorrichtung 6 weist die Vorrichtung 5 eine Verstelleinrichtung mit einem Stellrad 8 auf, das werkzeuglos bedienbar ist und mit dem die Schublade seitlich in Richtung des Doppelpfeils A relativ zur Ausziehführung 3 verschiebbar ist. Mit einer Schraube 9 kann das Stellrad 8 auch mit einem Werkzeug bedient werden.

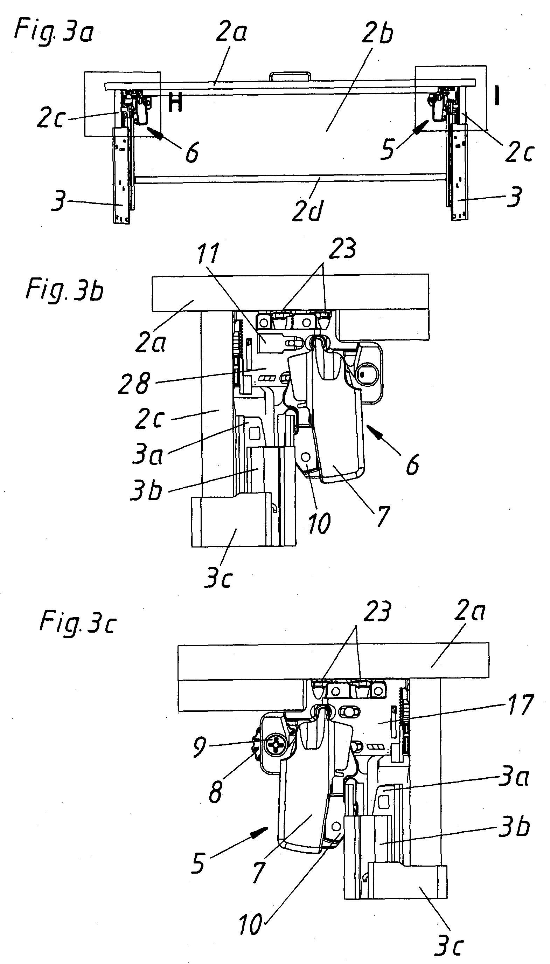

Fig. 3a zeigt dieselbe Anordnung wie Fig. 2a, wobei sich die Schublade 2 in einem teilweise ausgezogenen Zustand befindet. Der Möbelkorpus 4 ist wiederum nicht dargestellt.

Fig. 3b zeigt den mit H in Fig. 3a markierten Ausschnitt in einer Detailansicht. Erkennbar ist, dass die Ausziehführung 3 eine Ladenschiene 3a, an der die Schublade 2a lösbar gekuppelt ist, eine Korpusschiene 3c, die am Möbelkorpus 4 montiert ist und eine zwischen der Ladenschiene 3a und der Korpusschiene 3c angeordnete Mittelschiene 3b umfasst. Das Rastteil 10 der zweiten Vorrichtung 6 greift in Aussparungen der Ladenschiene 3a für die Kupplung mit der Schublade 2 verrastend ein. Eine Arretiereinrichtung 11 dient zur Arretierung der Schubladenposition in seitlicher Richtung und wird weiter unten näher beschrieben.

Fig. 3c zeigt den mit I in Fig. 3a markierten Ausschnitt in einer Detailansicht. Auch hier sind die Ladenschiene 3a, die Mittelschiene 3b und die Korpusschiene 3c einer Ausziehführung 3 zu erkennen, wobei die erste Vorrichtung 5 zum lösbaren Kuppeln der Schublade 2 mit der Ladenschiene 3a ähnlich wie die zweite Vorrichtung 6 ausgebildet ist. Die erste Vorrichtung 5 umfasst aber eine Verstelleinrichtung zur Verschiebung der Schublade 2 relativ zur Ausziehführung 3 in seitlicher Richtung. In den Fig. 3b und 3c sind Bohrlöcher 23 zu erkennen, mit denen die Vorrichtung 5 und die zweite Vorrichtung 6 an der Frontblende 2a befestigt sind.

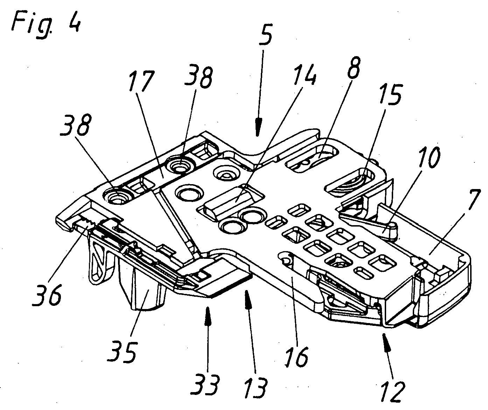

Fig. 4 zeigt eine perspektivische Ansicht der Vorrichtung 5, wobei die hier gezeigte Seite der Vorrichtung 5 am Schubladenboden 2b anliegt. Die Vorrichtung 5 umfasst dabei einen Befestigungsteil 13, mit dem die Vorrichtung an der Schublade befestigbar ist. Dazu dienen Bohrlöcher 38, mit denen der Befestigungsteil 13 am Schubladenboden 2b befestigbar ist und Bohrlöcher 23, mit denen der Befestigungsteil 13 an der Frontblende 2a befestigbar ist. Die Bohrlöcher 23 sind an der nicht dargestellten Seite der Vorrichtung 5 angeordnet sind und in dieser Figur nicht erkennbar sind. Die Vorrichtung 5 umfasst weiters einen Kupplungsteil 12, wobei die Positionen des Kupplungsteils 12 und des Befestigungsteils 13 relativ zueinander verschiebbar sind. Bei dieser Verschiebung wird der Spalt 15 zwischen Kupplungsteil 12 und Befestigungsteil 13 kleiner oder größer. Der Befestigungsteil 13 weist dabei eine Montageplatte 17 auf, auf der eine Montageplatte 16 des Kupplungsteils 12 teilweise aufliegt. Die Montageplatte 17 des Kupplungsteils 12 ist dabei verschiebbar gelagert. Ein Halteteil 14 des Befestigungsteils 13 ragt durch eine korrespondierende Öffnung in Form eines Langlochs im Kupplungsteil 12. Dieser Halteteil 14 dient einerseits zur Führung der relativen Positionsverschiebung des Kupplungsteils 12 und des Befestigungsteils 13, wobei durch die Grenzen des Langlochs die Verschiebbarkeit begrenzt ist. Der Halteteil 14 dient zudem zur Abstützung der Vorrichtung 5 am Schubladenboden 2b.

Am Kupplungsteil 12 sind der Rastteil 10 und der Löseteil 7 verschwenkbar gelagert. Das Stellrad 8 mit der Spiralscheibe 15 ist am Befestigungsteil 13 drehbar gelagert. Ein Verstellelement 35 ist am Befestigungsteil 13 der Vorrichtung 5 angeordnet und dient zur Höhenverstellung der Schublade 2, also zur Verstellung der Schublade 2 in vertikaler Richtung. Am Befestigungsteil 13 ist eine Verzahnung 34 angeordnet, die im Montagezustand in Längsrichtung der Ausziehführung 3 ausgerichtet ist. Das Verstellelement 35 weist eine Verzahnung 36 auf, die zur Verzahnung 34 korrespondierende Zähne aufweist. Durch eine Verschiebung des Verstellelements 35 in Längsrichtung der Ausziehführung 3 wird eine Keilfläche 33 zwischen Ausziehführung 3 und Schubladenboden 2b geschoben und hebt dadurch die Schublade 2 in vertikaler Richtung an. Ein entsprechendes Verstellelement 35 mit Keilfläche 33 und Verzahnung 36 ist an einer Verzahnung 34 des zweiten Befestigungsteils 27 in entsprechender Weise angeordnet, sodass die Schublade 2 auf beiden Seitenwänden 2c vertikal verstellbar ist.

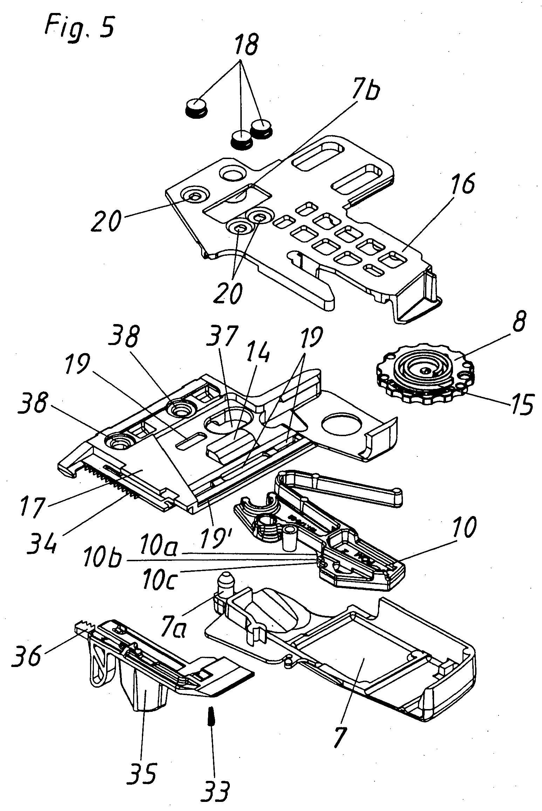

Fig. 5 zeigt eine Explosionsdarstellung der Vorrichtung 5. Die Montageplatte 16 des Kupplungsteils 12 wird in zusammengebautem Zustand der Vorrichtung 5 auf der Montageplatte 17 des Befestigungsteils 13 verschiebbar geführt. Zur Verbindung der zwei Montageplatten 16, 17 und somit des Befestigungsteils 13 und des Kupplungsteils 12 dienen Führungsstifte 18. In der Montageplatte 17 des Befestigungsteils 13 sind Langlöcher 19 angeordnet, in denen die Führungsstifte 18 verschiebbar geführt sind. Indem die Führungsstifte 18, die in den Langlöchern 19 angeordnet sind, in der Montageplatte 16 des Kupplungsteils 12 unverschieblich in Durchgangslöchern 20 gelagert sind, wird der Kupplungsteil 12 mittels der Langlöcher 19 verschiebbar vom Befestigungsteil 13 geführt. In ein Langloch 19' greift ein weiterer Führungsstift 24 ein, der an der dem Befestigungsteil 13 zugewandten Seite der Montageplatte 16 angeformt ist und in dieser Darstellung nicht erkennbar ist.

Am Befestigungsteil 13 ist das Stellrad 8 mit der Spiralscheibe 15 drehbar gelagert. An der Montageplatte 16 des Kupplungsteils 12 ist der Rastteil 10 und der Löseteil 7 verschwenkbar gelagert. Ein Wellenstummel 7a greift dazu in eine entsprechende Aufnahme 7b an der Montageplatte 16 des Kupplungsteils 12 ein. Um dies zu ermöglichen, ist in der Montageplatte 17 des Befestigungsteils ein Durchgangsloch 37 vorgesehen. Das Rastteil ist dabei federelastisch oder von einer Feder beaufschlagbar und ist in eine Aussparung der Ladenschiene 3a einer Ausziehführung 3 einrastbar. Das Rastteil 10 weist dabei wenigstens eine vorzugsweise mehrere Anschlagflächen auf, die an einer Kante der Aussparung in der Ladenschiene 3a zur Anlange bringbar sind. Die Anschlagflächen 10a, 10b, 10c sind in Ausziehrichtung der Schublade 2 versetzt zueinander angeordnet, wodurch ein sequentielles Einrasten des Rastteils 10 an der Ladenschiene 3a ermöglicht wird. Mittels des Löseteils 7 ist der gekuppelte Zustand des Rastteils 10 lösbar. Die Höhenverstellung der Schublade mittels des Verstellelements 35 und den Verzahnungen 34 und 36 sowie der Keilfläche 33 ist wie oben beschrieben bewerkstelligt.

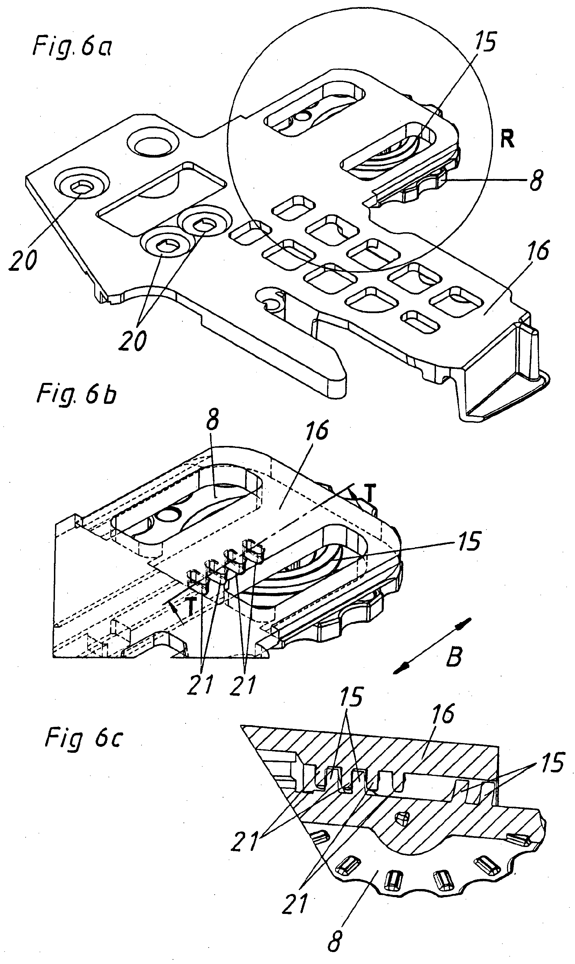

In der perspektivischen Ansicht der Fig. 6a ist die Montageplatte 16 des Kupplungsteils 12 sowie das am Befestigungsteil 13 drehbar gelagerte Stellrad 8, welches eine Spiralscheibe 15 aufweist, dargestellt.

Fig. 6b zeigt den mit R markierten Ausschnitt der Fig. 6a in einer Detailansicht, wobei auf der nicht dargestellten Seite der Montageplatte 16 Halteelemente 21 in diskreten Abständen angeordnet sind und aus diesem Grund gestrichelt bzw. in geringerer Strichstärke dargestellt sind. Die in Form einer Verzahnung angeordneten Halteelemente 21 sind mit der Spiralscheibe 15 in Wirkverbindung. Dies ist in der Schnittdarstellung der Fig. 6c zu sehen, die einen Schnitt entlang der mit TT markierten Schnittgeraden der Fig. 6b zeigt. Die zahnförmigen Halteelemente 21 und die Anschlagflächen der Spiralscheibe 15 sind in Eingriff. Durch eine Drehung des Stellrades 8 werden die Anschlagflächen der Spiralscheibe 15 an den Halteelementen 21 entlang geführt, wodurch es zu einer relativen Positionsverschiebung des Befestigungsteils 13 und des Kupplungsteils 12 in der Richtung des mit B markierten Doppelpfeils kommt.

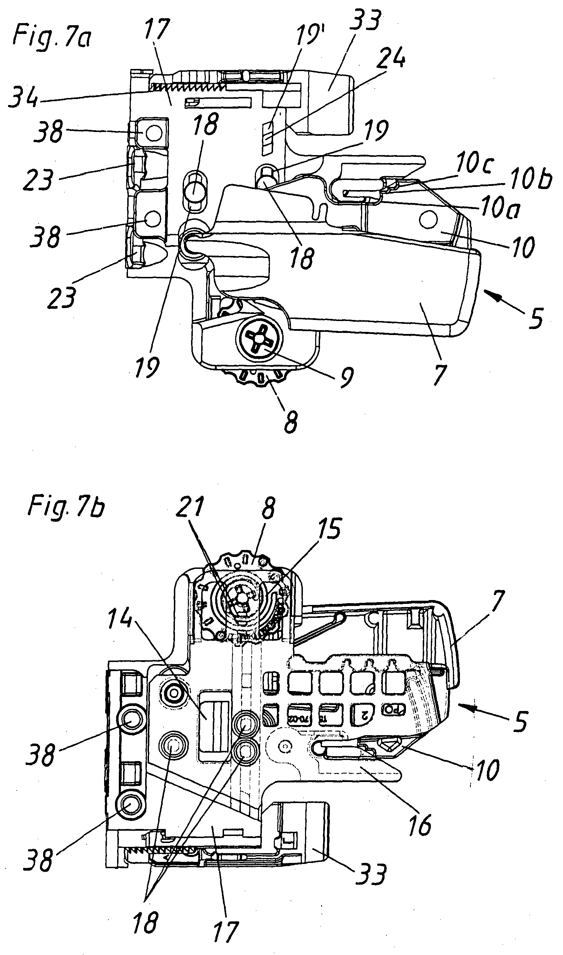

Fig. 7a zeigt die Vorrichtung 5 der Fig. 4 in einer Draufsicht. An der Montageplatte 17 des Befestigungsteils 13 sind Bohrlöcher 23 angeordnet, mit denen der Befestigungsteil 13 an der Schublade 2 befestigbar ist. Am Befestigungsteil 13 ist zudem das Stellrad 8, welches auch von einer Schraube 9 betätigbar ist, gelagert. Das Stellrad 8 ist zusammen mit der Spiralscheibe 15 und den Haltelementen 21, die am Kupplungsteil 12 angeordnet sind, Teil der Verstelleinrichtung. Am Kupplungsteil 12 sind zudem ein Löseteil 7 und ein Rastteil 10 mit Anschlagflächen 10a, 10b, 10c zur Verrastung mit einer Schiene einer Ausziehführung 3 verschwenkbar gelagert. Die Führungsstifte 18 sind in Langlöchern 19 der Montageplatte 17 verschiebbar geführt. Diese Langlöcher 19 sind Teil der Führungseinrichtung, die die relative Bewegbarkeit des Befestigungsteils 13 und des Kupplungsteils 12 zueinander gewährleistet. In einem weiteren Langloch 19' ist ein Führungsstift 24 ebenfalls zur Bewegungsführung angeordnet. Die Führungsstifte 18 und 24 dienen zudem zur Befestigung des Befestigungsteils 18 und des Kupplungsteils 19 aneinander.

Fig. 7b zeigt eine Ansicht der Vorrichtung 5 der Fig. 7a von unten, wobei an sich nicht erkennbare Teile teilweise durchscheinend dargestellt sind, wie beispielsweise die Halteelemente 21, die mit der Spiralscheibe 15 in Eingriff sind.

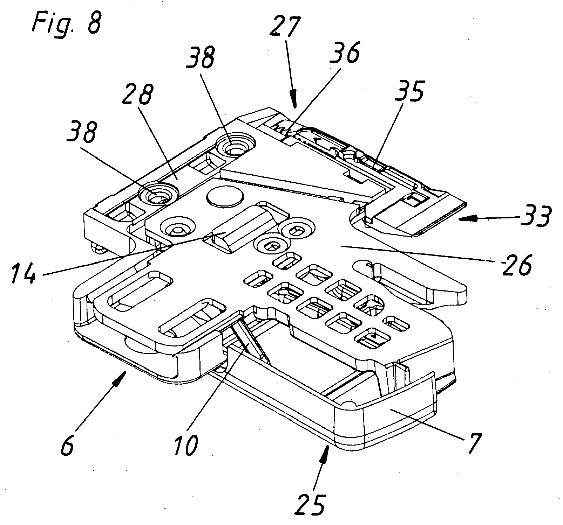

Fig. 8 zeigt eine perspektivische Ansicht einer zweiten Vorrichtung 6. Diese ist im Wesentlichen gleich aufgebaut, wie die Vorrichtung 5. Es fehlt jedoch die Verstelleinrichtung mit Stellrad 8 und Halteelementen 21. Die zweite Vorrichtung 6 weist einen zweiten Kupplungsteil 25 auf, der eine Montageplatte 26 umfasst, die auf einer Montagplatte 28 eines zweiten Befestigungsteils 27 in gleicher Weise wie die Montageplatten 16, 17 der ersten Vorrichtung 5 verschiebbar geführt ist. Dabei sind der zweite Befestigungsteil 27 und der zweite Kupplungsteil 25 schwimmend gelagert, sodass sie einer aktiven Verstellung der relativen Positionen des Befestigungsteils 13 und des Kupplungsteils 12 der Vorrichtung 5 folgen können. Bohrlöcher 23 dienen zur Befestigung des zweiten Befestigungsteils 27 an der Frontblende 2a. Weitere Bohrlöcher 38 dienen zur Befestigung des zweiten Befestigungsteils 27 am Schubladenboden 2b.

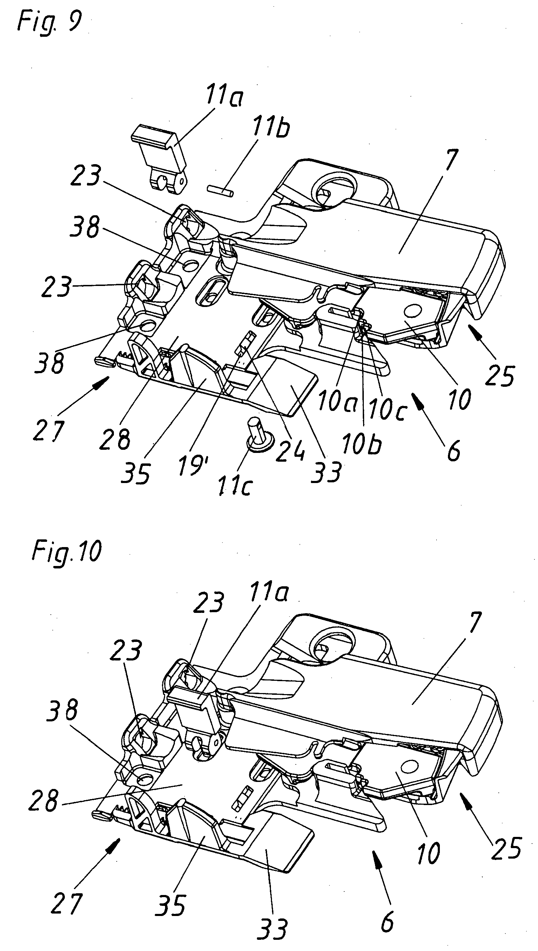

Fig. 9 zeigt in einer perspektivischen Ansicht, dass auch die in Fig. 8 nicht dargestellte Seite der zweiten Vorrichtung 6, zumindest was die verschwenkbare Lagerung eines Löseteils 7 und eines Rastteils 10 sowie deren Führungseinrichtung betrifft, dem Aufbau der Vorrichtung 5 entspricht. Zusätzlich weist die zweite Vorrichtung 6 jedoch eine Arretiereinrichtung 11 auf, die einen Hebel 11a umfasst, der über einen Bolzen 11 b mit einer Klemmschraube 11 c derart zusammengesetzt wird, dass eine Arretierung des zweiten Befestigungsteils 27 und des zweiten Kupplungsteils 25 eine weitere relative Positionsverschiebung dieser Teile verhindert. Die zweite Vorrichtung 6 umfasst keine Verstelleinrichtung, die eine aktive Positionsverschiebung des zweiten Befestigungsteils 27 bzw. des zweiten Kupplungsteils 25 erlauben würde.

Fig. 10 zeigt in einer perspektivischen Ansicht die Elemente der Fig. 9 in zusammengesetztem Zustand. Der Hebel 11a der Arretiereinrichtung 11 befindet sich in der Offenstellung. Wird dieser in Richtung der Montageplatte 28 des zweiten Befestigungsteils verschwenkt, wobei der Bolzen 11 b als Drehachse dient, ergibt sich eine Klemmung. Diese Klemmwirkung ist dabei bevorzugt so groß, dass auch ein Drehen des Stellrades 8 an der Vorrichtung 5 und somit eine Positionsverschiebung der Schublade 2 insgesamt in seitlicher Richtung verhindert wird.

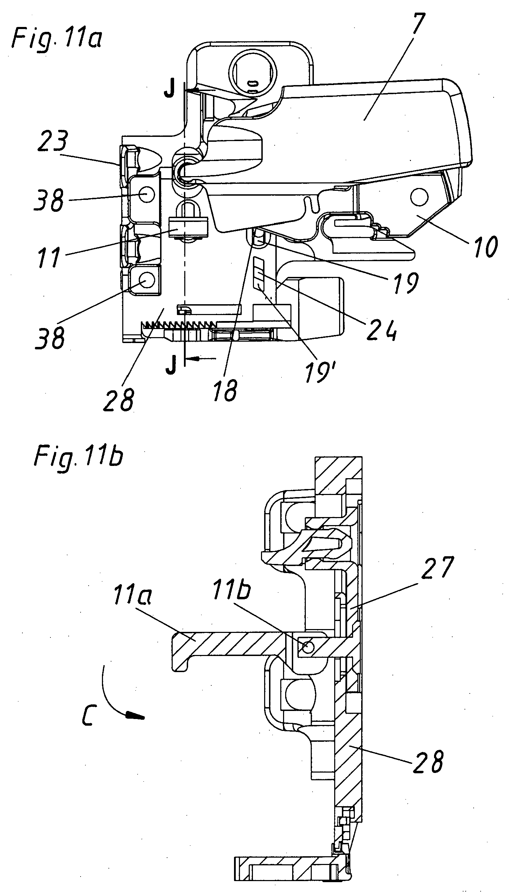

Fig. 11 a zeigt eine Draufsicht auf die zweite Vorrichtung 6 in nicht arretiertem Zustand.

Fig. 11b zeigt eine Schnittdarstellung entlang der mit J-J bezeichneten Schnittgeraden der Fig. 11a. Hierbei ist besonders gut die Hebelwirkung des Hebels 11a zu erkennen. Wird dieser entlang des Pfeils C in Richtung der Montageplatte 28 des zweiten Befestigungsteils 27 verschwenkt, ergibt sich die gewünschte Klemmwirkung zwischen der Montageplatte 26 des zweiten Kupplungsteils 25 und der Montageplatte 28 des zweiten Befestigungsteils 27.

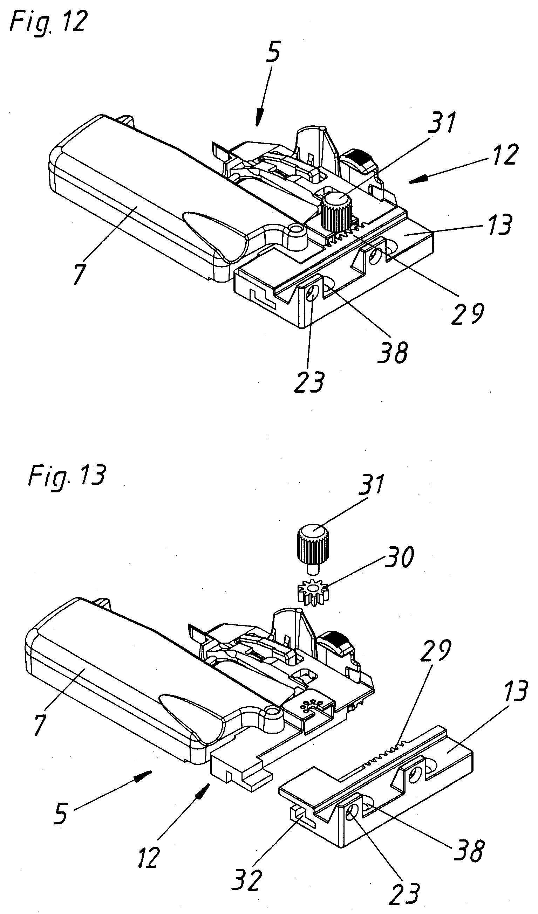

Fig. 12 zeigt eine Vorrichtung 5 zum lösbaren Kuppeln einer Schublade 2 mit einer Ausziehführung 3 in einer zweiten Ausführungsform. Der Rastteil 10 und der Löseteil 7 der Vorrichtung 5 können dabei wie in der ersten Ausführungsform ausgebildet sein. Der Befestigungsteil 13 der Vorrichtung 5 weist in dieser Ausführungsform eine Verzahnung 29 auf, die im Montagezustand der Vorrichtung 5 entlang der Frontblende 2a und somit in seitlicher Richtung ausgerichtet ist.

Wie anhand der teilweisen Explosionsdarstellung der Fig. 13 erkennbar ist, sind am Kupplungsteil 12 ein Zahnrad 30 sowie ein Stellrad 31 drehbar gelagert. Eine Drehung des Stellrads 31 überträgt sich auf das Zahnrad 30 und nachfolgend auf die Verzahnung 29, sodass der Kupplungsteil 12 und der Befestigungsteil 13 relativ zueinander verschiebbar sind, falls das Zahnrad 30 mit der Verzahnung 29 in Eingriff ist. Verschiedene Anschlagflächen 32 des Befestigungsteils 13 sind mit korrespondierenden Flächen am Kupplungsteil 12 in Eingriff und dienen zur Führung der relativen Positionsverschiebungen des Kupplungsteils 12 und des Betätigungsteils 13.

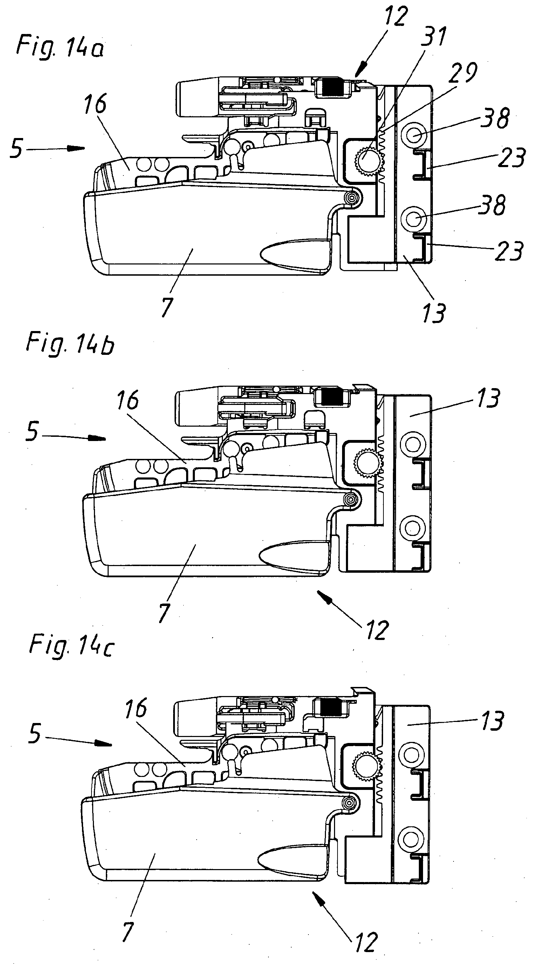

In den Fig. 14a bis 14c ist jeweils eine Draufsicht der Vorrichtung 5 der Fig. 12 dargestellt. Durch eine Drehung des Stellrads 31 ergibt sich eine relative Positionsverschiebung des Befestigungsteils 13 und des Kupplungsteils 12 entlang des Doppelpfeils A. Die Fig. 14a, 14b, 14c unterscheiden sich dabei durch die relative Position des Befestigungsteils 13 und des Kupplungsteils 12.

## Patentansprüche

1. Vorrichtung (5) zum lösbaren Kuppeln einer Schublade (2) mit einer ausziehbaren Schiene (3a) einer Ausziehführung (3), umfassend:
- einen an einer Schublade (2) befestigbaren Befestigungsteil (13),
- einen mit der Schiene (3a) kuppelbaren Kupplungsteil (12), wobei der Kupplungsteil (12) einen mit der Schiene (3a) im Zuge des Montageprozesses selbsttätig verrastbaren, federnden oder federbeaufschlagbaren, Rastteil (10) und einen Löseteil (7) in Form eines händisch zu bedienenden Schwenkhebels zum Lösen der Arretierung zwischen Rastteil (10) und Schiene (3a) aufweist,
**dadurch gekennzeichnet, dass** die Vorrichtung (5) eine Verstelleinrichtung mit einem Stellrad (8, 31) aufweist, durch welches die relative Position des Befestigungsteils (13) und des Kupplungsteils (12) zueinander einstellbar ist, wobei in Montagelage die Position einer mit der Schiene (3a) verbundenen Schublade (2) relativ zur Schiene (3a) in seitlicher Richtung einstellbar ist.

2. Vorrichtung nach Anspruch 1, **dadurch gekennzeichnet, dass** an der Vorrichtung (5) eine Führungseinrichtung angeordnet ist, von welcher der Befestigungsteil (13) und der Kupplungsteil (12) relativ zueinander verschiebbar geführt sind.

3. Vorrichtung nach Anspruch 2, **dadurch gekennzeichnet, dass** die Führungseinrichtung mindestens ein im Befestigungsteil (13) oder im Kupplungsteil (12) angeordnetes Langloch (19) aufweist, in welches ein am anderen dieser beiden Teile angebrachter Führungszapfen (18) oder Führungsstift eingreift.

4. Vorrichtung nach einem der Ansprüche 1 bis 3, **dadurch gekennzeichnet, dass** die Verstelleinrichtung mindestens zweiteilig ausgebildet ist, wobei ein erster Teil am Befestigungsteil (13) und ein zweiter Teil am Kupplungsteil (12) angeordnet ist.

5. Vorrichtung nach einem der Ansprüche 1 bis 4, **dadurch gekennzeichnet, dass** die Vorrichtung (5) eine Arretiereinrichtung umfasst, durch die die relative Position des Befestigungsteils (13) und des Kupplungsteils (12) zueinander lösbar arretierbar ist.

6. Vorrichtung nach Anspruch 5, **dadurch gekennzeichnet, dass** die Arretiereinrichtung eine Klemmwirkung erzeugende Exzenterschraube umfasst.

7. Vorrichtung nach einem der Ansprüche 1 bis 6, **dadurch gekennzeichnet, dass** die Verstelleinrichtung ein Stellrad (8) mit einer Spiralscheibe (15) umfasst, welche mit in diskreten Abständen angebrachten Halteelementen (21) in Eingriff ist, wobei die Spiralscheibe (15) durch Drehung des Stellrads (8) zur relativen Positionsverschiebung des Befestigungsteils (13) und des Kupplungsteils (12) an den Halteelementen (21) entlang geführt wird.

8. Vorrichtung nach einem der Ansprüche 1 bis 6, **dadurch gekennzeichnet, dass** die Verstelleinrichtung ein im Befestigungsteil (13) oder im Kupplungsteil (12) angeordnetes Zahnrad (30) umfasst, welches mit einer am anderen dieser beiden Teile angeordneten Verzahnung (29) in Eingriff ist, wobei eine Drehung des Stellrades (31) auf das Zahnrad (30) übertragbar ist.

9. Vorrichtung nach einem der Ansprüche 1 bis 8, **dadurch gekennzeichnet, dass** die Verstelleinrichtung ein Stellrad (8, 31) mit einem Exzenter aufweist.

10. Vorrichtungsset zum lösbaren Kuppeln einer Schublade (2) mit ausziehbaren, an gegenüberliegenden Seiten eines Möbelkorpus (4) angeordneten Schienen (3a) jeweils einer Ausziehführung (3), umfassend:
- eine erste Vorrichtung (5) nach einem der Ansprüche 1 bis 9 zum lösbaren Kuppeln der Schublade (2) mit der ersten Schiene (3a), und
- eine zweite Vorrichtung (6) zum lösbaren Kuppeln der Schublade (2) mit der zweiten Schiene (3a), wobei
die zweite Vorrichtung (6) einen an der Schublade (2) befestigbaren zweiten Befestigungsteil (27) und einen mit der Schiene kuppelbaren zweiten Kupplungsteil (25) aufweist, wobei der zweite Befestigungsteils (27) und der zweite Kupplungsteil (25) zur Anpassung an die relative Positionsverschiebung des Befestigungsteils (13) und des Kupplungsteils (12) der ersten Vorrichtung (5) relativ zueinander beweglich gelagert sind.

11. Vorrichtungsset nach Anspruch 10, **dadurch gekennzeichnet, dass** an der zweiten Vorrichtung (6) eine zweite Führungseinrichtung angeordnet ist, von welcher der zweite Befestigungsteil (27) und der zweite Kupplungsteil (25) relativ zueinander verschiebbar geführt sind.

12. Vorrichtungsset nach Anspruch 11, **dadurch gekennzeichnet, dass** die zweite Führungseinrichtung mindestens ein im zweiten Befestigungsteil (27) oder im zweiten Kupplungsteil (25) angeordnetes Langloch aufweist, in welches ein am anderen dieser beiden Teile angebrachter Führungszapfen oder Führungsstift eingreift.

13. Vorrichtungsset nach einem der Ansprüche 10 bis 12, **dadurch gekennzeichnet, dass** die zweite Vorrichtung (6) eine Arretiereinrichtung (11) aufweist, durch welche der zweite Befestigungsteil (27) und der zweite Kupplungsteil (25) lösbar arretierbar sind.

14. Schublade mit einer Ausziehführung (3) und einer an der Schublade (2) befestigten Vorrichtung (5) nach einem der Ansprüche 1 bis 9 oder einem an der Schublade (2) befestigten Vorrichtungsset nach einem der Ansprüche 10 bis 13.

15. Möbel mit wenigstens einer Schublade (2) nach Anspruch 14.

## Claims

1. An apparatus (5) for releasably coupling a drawer (2) to an extendable rail (3a) of an extension guide (3), including:
- a fixing portion (13) which can be fixed to a drawer (2),
- a coupling portion (12) which can be coupled to the rail (3a), wherein the coupling portion (12) has a resilient, spring-loaded or spring-loadable latching portion (10) which can be automatically latched with the rail (3a) in the course of the mounting process, and a release portion (7) in the form of a pivotal lever which is to be operated by hand for releasing the coupling between the latching portion (12) and the rail (3a),
**characterized in that** the apparatus (5) has an adjusting device with an adjusting wheel (8, 31) by way of which the relative position of the fixing portion (13) and the coupling portion (12) can be adjusted to each other, wherein, in the mounted position, the position of a drawer (2) connected to the rail (3a) can be adjusted relative to the rail (3a) in a lateral direction.

2. The apparatus according to claim 1, **characterized in that** arranged on the apparatus (5) is a guide device by which the fixing portion (13) and the coupling portion (12) are guided displaceably relative to each other.

3. The apparatus according to claim 2, **characterized in that** the guide device has at least one slot (19) which is arranged in one of the fixing portion (13) and the coupling portion (12) and into which engages a guide pin (18) or guide projection arranged on the other of these two parts.

4. The apparatus according to one of the claims 1 to 3, **characterized in that** the adjusting device is of an at least two-part configuration, wherein a first part is arranged on the fixing portion (13) and a second part is arranged on the coupling portion (12).

5. The apparatus according to one of the claims 1 to 4, **characterized in that** the apparatus (5) has an arresting device by which the positions of the fixing portion (13) and the coupling portion (12) relative to each other can be releasably arrested.

6. The apparatus according to claim 5, **characterized in that** the arresting device includes an eccentric screw producing a clamping action.

7. The apparatus according to one of the claims 1 to 6, **characterized in that** the adjusting device includes an adjusting wheel (8) with a spiral disk (15) which is in engagement with holding elements (21) mounted at discrete spacings, wherein the spiral disk (15) is guided along the holding elements (21) by rotation of the adjusting wheel (8) for relative positional displacement of the fixing portion (13) and the coupling portion (12).

8. The apparatus according to one of the claims 1 to 6, **characterized in that** the adjusting device includes a gear (30) arranged in one of the fixing portion (13) and the coupling portion (12), the gear (30) is engagement with a tooth arrangement (29) arranged on the other of these two parts, wherein a rotation of the adjusting wheel (8) can be transmitted to the gear (30).

9. The apparatus according to one of the claims 1 to 8, **characterized in that** the adjusting device includes an adjusting wheel (8, 31) having an eccentric.

10. An apparatus set for releasably coupling a drawer (2) to extendable rails (3a) of a respective extension guide (3) being arranged at mutually opposite sides of a furniture carcass (4), including:
- a first apparatus (5) according to one of the claims 1 to 9 for releasably coupling the drawer (2) to the first rail (3a), and
- a second apparatus (6) for releasably coupling the drawer (2) to the second rail (3a), wherein
the second apparatus (6) has a second fixing portion (27) which can be fixed to the drawer (2) and a second coupling portion (25) which can be coupled to the rail, wherein the second fixing portion (27) and the second coupling portion (25) are mounted movably relative to each other for adaptation to the relative positional displacement of the fixing portion (13) and the coupling portion (12) of the first apparatus (5).

11. The apparatus set according to claim 10, **characterized in that** arranged on the second apparatus (6) is a second guide device by which the second fixing portion (27) and the second coupling portion (25) are guided displaceably relative to each other.

12. The apparatus set according to claim 11, **characterized in that** the second guide device has at least one slot which is arranged in one of the second fixing portion (27) and the second coupling portion (25) and into which engages a guide pin or guide projection arranged on the other of these two parts.

13. The apparatus set according to one of the claims 10 to 12, **characterized in that** the second apparatus (6) has an arresting device (11) by which the second fixing portion (27) and the second coupling portion (25) can be releasably arrested.

14. A drawer having an extension guide (3) and an apparatus (5) according to one of the claims 1 to 9 mounted to the drawer (2) or an apparatus set according to one of the claims 10 to 13 mounted to the drawer (2).

15. An article of furniture having at least one drawer (2) according to claim 14.

## Revendications

1. Dispositif (5) pour l'accouplement amovible d'un tiroir (2) avec un rail extensible (3a) d'un guidage extensible (3), comprenant :
- une partie de fixation (13) pouvant être fixée à un tiroir (2),
- une partie d'accouplement (12) pouvant être accouplée au rail (3a), la partie d'accouplement (12) présentant une partie d'arrêt (10) pouvant être encliquetée automatiquement avec le rail (3a) au cours du processus de montage, élastique ou pouvant être soumise à l'action d'un ressort,
et une partie de déblocage (7) sous forme d'un levier pivotant à utiliser manuellement pour débloquer l'arrêt entre la partie d'arrêt (10) et le rail (3a), **caractérisé en ce que** le dispositif (5) présente un dispositif de réglage avec une roue de réglage (8, 31), par laquelle la position relative de la partie de fixation (13) et de la partie d'accouplement (12) est réglable l'une par rapport à l'autre, dans lequel en position de montage la position d'un tiroir (2) relié au rail (3a) est réglable relativement au rail (3a) dans le sens latéral.

2. Dispositif selon la revendication 1, **caractérisé en ce qu'**un dispositif de guidage est disposé sur le dispositif (5), par lequel la partie de fixation (13) et la partie d'accouplement (12) sont guidées de façon déplaçable relativement l'une à l'autre.

3. Dispositif selon la revendication 2, **caractérisé en ce que** le dispositif de guidage présente au moins un trou longitudinal (19) disposé dans la partie de fixation (13) ou dans la partie d'accouplement (12), dans lequel engrène un pion de guidage (18) ou une broche de guidage agencé(e) sur l'autre de ces deux parties.

4. Dispositif selon l'une des revendications 1 à 3, **caractérisé en ce que** le dispositif de réglage est conçu au moins en deux parties, dans lequel une première partie est disposée sur la partie de fixation (13) et une deuxième partie sur la partie d'accouplement (12).

5. Dispositif selon l'une des revendications 1 à 4, **caractérisé en ce que** le dispositif (5) comprend un dispositif d'arrêt, par lequel la position relative de la partie de fixation (13) et de la partie d'accouplement (12) peut être arrêtée de façon amovible l'une par rapport à l'autre.

6. Dispositif selon la revendication 5, **caractérisé en ce que** le dispositif d'arrêt comprend un écrou excentrique engendrant une action de serrage.

7. Dispositif selon l'une des revendications 1 à 6, **caractérisé en ce que** le dispositif de réglage comprend une roue de réglage (8) avec un disque spiralé (15), lequel est en prise avec des éléments de retenue (21) agencés à intervalles discrets, dans lequel le disque spiralé (15) est guidé le long des éléments de retenue (21) par rotation de la roue de réglage (8) relativement au déplacement de position de la partie de fixation (13) et de la partie d'accouplement (12).

8. Dispositif selon l'une des revendications 1 à 6, **caractérisé en ce que** le dispositif de réglage comprend une roue dentée (30), disposée dans la partie de fixation (13) ou dans la partie d'accouplement (12), laquelle entre en prise avec un engrenage (29) disposé au niveau de l'autre de ces deux parties, une rotation de la roue de réglage (31) pouvant être transmise à la roue dentée (30).

9. Dispositif selon l'une des revendications 1 à 8, **caractérisé en ce que** le dispositif de réglage présente une roue de réglage (8, 31) avec un excentrique.

10. Ensemble formant dispositif pour l'accouplement amovible d'un tiroir (2) avec des rails (3a) extensibles, disposés sur des côtés opposés d'un corps de meuble (4), à chaque fois d'un guidage extensible (3), comprenant :
- un premier dispositif (5) selon l'une des revendications 1 à 9 pour l'accouplement amovible du tiroir (2) avec le premier rail (3a), et
- un deuxième dispositif (6) pour l'accouplement amovible du tiroir (2) avec le deuxième rail (3a), dans lequel le deuxième dispositif (6) présente une deuxième partie de fixation (27) pouvant être fixée au tiroir (2) et une deuxième partie d'accouplement (25) pouvant être accouplée au rail, dans lequel la deuxième partie de fixation (27) et la deuxième partie d'accouplement (25) sont logées de façon mobile relativement l'une à l'autre afin de s'adapter au déplacement de position relatif de la partie de fixation (13) et de la partie d'accouplement (12) du premier dispositif (5).

11. Ensemble formant dispositif selon la revendication 10, **caractérisé en ce que** sur le deuxième dispositif (6) est disposé un deuxième dispositif de guidage, par lequel la deuxième partie de fixation (27) et la deuxième partie d'accouplement (25) sont guidées de façon déplaçable relativement l'une à l'autre.

12. Ensemble formant dispositif selon la revendication 11, **caractérisé en ce que** le deuxième dispositif de guidage présente au moins un trou longitudinal disposé dans la deuxième partie de fixation (27) ou dans la deuxième partie d'accouplement (25), dans lequel engrène un pion de guidage ou une broche de guidage agencé(e) sur l'autre de ces deux parties.

13. Ensemble formant dispositif selon l'une des revendications 10 à 12, **caractérisé en ce que** le deuxième dispositif (6) présente un dispositif d'arrêt (11), par lequel la deuxième partie de fixation (27) et la deuxième partie d'accouplement (25) peuvent être arrêtées de façon amovible.

14. Tiroir avec un guidage télescopique (3) et un dispositif (5) fixé sur le tiroir (2) selon l'une des revendications 1 à 9 ou un ensemble formant dispositif fixé sur le tiroir (2) selon l'une des revendications 10 à 13.

15. Meuble avec au moins un tiroir (2) selon la revendication 14.
